# EUROPÄISCHE PATENTSCHRIFT

(11) **EP 0 817 919 B1**
(45) Veröffentlichungstag und Bekanntmachung des Hinweises auf die Patenterteilung: **15.09.1999**
(21) Anmeldenummer: 96907395.6
(22) Anmeldetag: 08.03.1996
(51) Int. Cl.: F15B 21/04, B01D 35/01

(54) **HYDRAULISCHE SCHALTUNG**
HYDRAULIC CIRCUIT
CIRCUIT HYDRAULIQUE

(30) Priorität: 29.03.1995 DE 19511451; 02.05.1995 DE 19515962
(43) Veröffentlichungstag der Anmeldung: 14.01.1998
(73) Patentinhaber: ARGO GmbH für Fluidtechnik, 76703 Kraichtal-Menzingen (DE)
(72) Erfinder: GRUNDEL, Eugen, D-76689 Karlsdorf-Neuthard (DE)
(74) Vertreter: Hoeger, Stellrecht & Partner
(86) Internationale Anmeldenummer: EP9600998
(87) Internationale Veröffentlichungsnummer: WO9630655

(56) Entgegenhaltungen:
- DE-A- 4 011 913
- DE-B- 1 941 153
- FR-A- 2 291 784
- US-A- 3 996 137
- OLHYDRAULIK UND PNEUMATIK, Bd. 19, Nr. 5, 1975, MAINZ DE, Seiten 409-412, XP002007021 H.REINHARDT: "bypassventil in hydrofiltern"

## Beschreibung

Die Erfindung betrifft eine hydraulische Schaltung zur Versorgung eines Hydraulikverbrauchers mit Hydraulikflüssigkeit, wobei die Schaltung einen Vorrat an Hydraulikflüssigkeit, eine erste Pumpe zum Bereitstellen der Hydraulikflüssigkeit für den Hydraulikverbraucher und ein Rücklauffilter umfaßt, über welches die vom Hydraulikverbraucher rückströmende Hydraulikflüssigkeit gefiltert wird.

Solche hydraulischen Schaltungen werden in vielfältiger Weise bei selbstfahrenden Arbeitsmaschinen, insbesondere Baumaschinen oder landwirtschaftlichen Fahrzeugen eingesetzt, bei denen einer der Hydraulikverbraucher in vielen Fällen eine hydrostatische Lenkung bzw. eine Hilfskraftlenkanlage ist.

Die Sicherheitsvorschriften verlangen, daß bei solchen hydraulischen Schaltungen eine Notversorgung des Hydraulikverbrauchers mit Hydraulikflüssigkeit gewährleistet sein muß, wenn die Pumpe, die normalerweise die Hydraulikflüssigkeit zur Verfügung stellt, ausfallen sollte.

Dies wurde bislang so gelöst, daß der Verbraucher über eine zusätzliche Versorgungsleitung parallel zu der die Pumpe beinhaltenden Leitung mit dem Hydraulikflüssigkeitsvorrat verbunden war. Durch diese Leitung wurde der Verbraucher im Falle des Ausfallens der Hydraulikflüssigkeitspumpe mit Hydraulikflüssigkeit versorgt, so daß auch in solchen Notfällen, beispielsweise die Lenkbarkeit des Fahrzeugs, wenn auch mit entsprechendem Kraftaufwand, noch gegeben war.

Nachteilig an der bisherigen Lösung ist der relativ hohe bauliche Aufwand.

Aufgabe der vorliegenden Erfindung ist es, eine hydraulische Schaltung mit einer Notversorgung eines Verbrauchers auszurüsten unter gleichzeitiger Minimierung des konstruktiven und baulichen Aufwands.

Diese Aufgabe wird bei der eingangs beschriebenen hydraulischen Schaltung erfindungsgemäß dadurch gelöst, daß das Rücklauffilter anströmseitig über eine Leitung mit dem Vorrat an Hydraulikflüssigkeit verbunden ist, welche in antiparalleler Schaltung ein Druckbegrenzungsventil und ein Nachsaugventil umfaßt und unterhalb des Hydraulikflüssigkeitsspiegels des Hydraulikflüssigkeitsvorrats mündet.

Durch die Verwendung eines Druckbegrenzungsventils und eines Nachsaugventils in antiparalleler Schaltung in der Leitung, welche die Anströmseite des Rücklauffilters mit dem Hydraulikflüssigkeitsvorrat verbindet, ist eine besonders kostengünstige Lösung des obigen Problems gefunden. Die Anströmseite des Rücklauffilters wird üblicherweise mit einer Leitung mit dem Hydraulikflüssigkeitsvorrat verbunden, welche ein Druckbegrenzungsventil enthält, um zu verhindern, daß bei einer Verschmutzung des Filters ein zu hoher Druck auf der Anströmseite des Filterelements aufgebaut wird. Bei einer Erschöpfung der Filterkapazität steigt der Druckabfall über das Filterelement sehr stark an, und sobald ein bestimmter Druckwert auf der Anströmseite des Rücklauffilters überschritten wird, öffnet das Druckbegrenzungsventil und läßt die rückfließende Hydraulikflüssigkeit direkt zum Vorratstank unter Umgehung des Filterelements fließen.

Die Erfindung nutzt nun das Vorhandensein dieser Leitung und stellt dem Druckbegrenzungsventil in antiparalleler Schaltung ein Nachsaugventil zur Seite, welches in umgekehrter Richtung arbeitet, d.h. das Nachsaugventil öffnet, und läßt Hydraulikflüssigkeit aus dem Vorrat zur Anströmseite des Rücklauffilters gelangen, wenn ein bestimmter Druckwert in der Rücklaufleitung unterschritten wird, was regelmäßig dann der Fall ist, wenn die Pumpe zur Versorgung des Verbrauchers mit Hydraulikflüssigkeit ausgefallen ist, und der Verbraucher, sprich z.B. ein Stellkolben, bewegt wird.

Für die antiparallele Schaltung von Druckbegrenzungsventil und Nachsaugventil lassen sich sehr platzsparende Konstruktionen finden, die weiter unten noch näher beschrieben sind und die ebenfalls Teil der vorliegenden Erfindung darstellen. Insbesondere nutzt die vorliegende Erfindung die üblicherweise bereits bestehende Leitung, die die Anströmseite des Rücklauffilters über ein Druckbegrenzungsventil mit dem Hydraulikflüssigkeitsvorrat verbindet und sorgt andererseits mit der Plazierung der Mündung der Leitung unterhalb des Hydraulikflüssigkeitsspiegels, vorzugsweise etwa am tiefsten Punkt des Vorrats, dafür, daß im Falle daß der Verbraucher über diese Leitung Hydraulikflüssigkeit anfordert, jederzeit Hydraulikflüssigkeit zur Verfügung gestellt werden kann, ohne daß Luft in das System gelangen kann. Letzteres hätte die Notwendigkeit einer langwierigen Entlüftung des Systems mit den entsprechenden Problemen zur Folge.

Vorzugsweise ist das Rücklauffilter abströmseitig mit einer ein Druckhalteventil enthaltenden Leitung mit dem Vorrat an Hydraulikflüssigkeit verbunden. Dies ermöglicht, daß beim Vorhandensein verschiedener Verbraucher diese gesonderte Pumpen mit Hydraulikflüssigkeit, beispielsweise direkt aus dem Hydraulikvorrat, versorgen und daß wahlweise eine oder mehrere der Pumpen mit ihrer Saugseite an der Abströmseite des Rücklauffilters verbunden sein können.

So kann im Rahmen der vorliegenden Erfindung die erste Pumpe mit ihrer Saugseite alternativ mit der Abstromseite des Rücklauffilters verbunden sein oder aber mit ihrer Saugseite direkt mit dem Vorrat an Hydraulikflüssigkeit verbunden sein.

Bei der Versorgung mehrerer Hydraulikverbraucher sind häufig mehrere Hydraulikpumpen vorhanden, wobei alle oder ein Teil der Pumpen die Hydraulikverbraucher direkt aus dem Vorrat mit Hydraulikflüssigkeit versorgen während eine oder mehrere der zusätzlichen Pumpen mit der Abströmseite des Rücklauffilters verbunden werden und die Hydraulikflüssigkeit von dort zu dem zugehörigen Verbraucher zurückfördern. Einer Minimierung des baulichen Aufwandes dient es, wenn die Verbraucher in eine gemeinsame Rücklaufleitung münden, welche mit der Anstromseite des Rücklauffilters verbunden ist. Das Rücklauffilter hat hier die Aufgabe, gegebenenfalls vorkommenden Abrieb oder sonstige Verschmutzungen, die von den Verbrauchern und/oder den Pumpen stammen, aus der rücklaufenden Hydraulikflüssigkeit zu filtern, um eine Verschmutzung des im Vorratstank befindlichen Vorrats an Hydraulikflüssigkeit zu vermeiden.

Zur Verwendung in der vorstehend beschriebenen erfindungsgemäßen hydraulischen Schaltung hat sich insbesondere ein Doppelrückschlagventil als geeignet erwiesen, daß als Druckbegrenzungs- und Nachsaugventil in antiparalleler Schaltung ausgestaltet ist, wobei das Doppelrückschlagventil ein Gehäuse mit einem ersten Ventilsitz umfaßt, gegen den ein erster Ventilkörper in vorgespanntem Zustand gehalten ist, wobei der erste Ventilkörper eine einen zweiten Ventilsitz bildende Öffnung aufweist, welche mit einem zweiten Ventilkörper verschließbar ist.

Bevorzugt wird der ersten Ventilkörper die Form einer Ventilplatte aufweisen, welche federbelastet gegen den ersten Ventilsitz gedrückt wird. Alternativ hierzu ist ebenfalls bevorzugt, wenn der erste Ventilkörper eine kegelmantelähnliche Form aufweist, wobei die Spitze entfernt ist und den zweiten Ventilsitz bildet.

Bevorzugt wird der zweite Ventilkörper eine sphärische Oberfläche aufweisen, welche den zweiten Ventilsitz verschließt. Der zweite Ventilkörper besitzt insbesondere Kugelform. Bei einer besonders bevorzugten Konstruktion wird der zweite Ventilkörper in einem an den ersten Ventilkörper und von diesem verschlossenen Käfig angeordnet. Damit bildet der zweite Ventilkörper zusammen mit dem ersten Ventilkörper eine vorfertigbare Montageeinheit.

Weiterhin wird bevorzugt, wenn das Gehäuse des Doppelrückschlagventils einen zylindrischen Abschnitt aufweist, in welchem der erste Ventilkörper axial verschieblich gehalten ist, wobei der zylindrische Abschnitt abstromseitig zum ersten Ventilsitz radiale Öffnungen für den Durchtritt von Hydraulikflüssigkeit in den Vorrat aufweist.

Diese und weitere Vorteile der Erfindung werden im folgenden anhand der Zeichnung noch näher erläutert. Es zeigen im einzelnen:
- Fig. 1: ein Blockschema einer erfindungsgemäßen hydraulischen Schaltung;
- Fig. 2: eine alternative hydraulische Schaltung gemäß vorliegender Erfindung;
- Fig. 3 bis Fig. 5: Blockschema einer erfindungsgemäß hydraulischen Schaltung mit einem in Schnittdarstellung gezeigten Rücklauffilter in drei verschiedenen Betriebsstellungen; und
- Fig. 3a bis 5a: ein Detail aus den Figuren 3 bis 5.

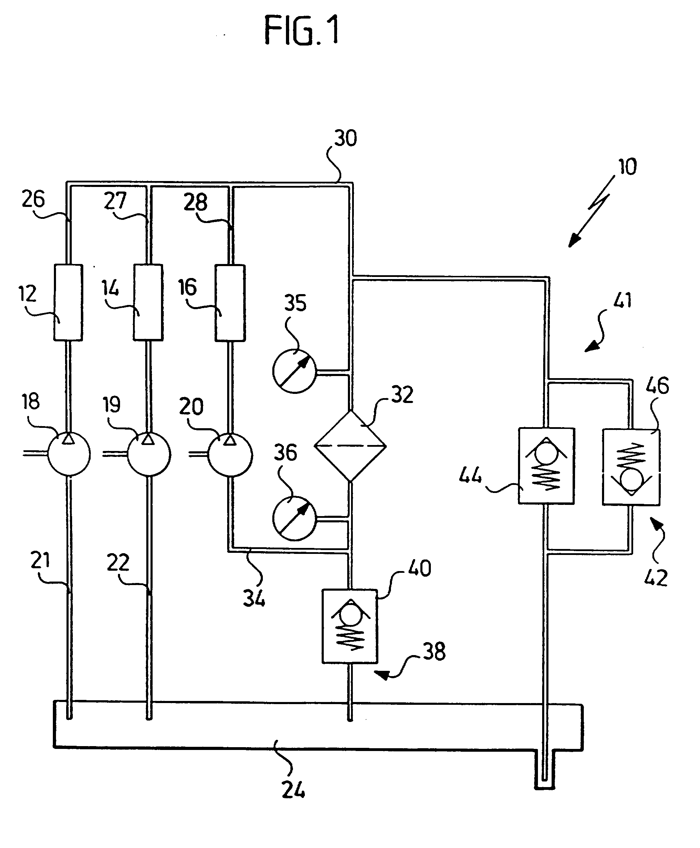

Fig. 1 zeigt eine insgesamt mit dem Bezugszeichen 10 versehene hydraulische Schaltung, bei welcher neben einer hydrostatischen Lenkung 12 zwei weitere Verbraucher 14, 16 von jeweils gesonderte Pumpen 18, 19, 20 mit Hydraulikflüssigkeit versorgt werden. Dabei sind die Pumpen 18 und 19, die die hydraulische Lenkung 12 bzw. den Verbraucher 14 versorgen, mit einer Saugleitung 21, 22 direkt mit einem Tank 24, der einen Hydraulikflüssigkeitsvorrat beinhaltet, verbunden.

Die von den Verbrauchern verbrauchte Hydraulikflüssigkeit wird über Rücklaufleitungen 26, 27, 28 in eine gemeinsame Rücklaufleitung 30 eingespeist, welche zu einem Rücklauffilter 32 führt. Das Rücklauffilter 32 ist als Saugfilter ausgeführt und ist mit seiner Abstromseite mit einer Saugleitung 34 mit der Saugseite der Pumpe 20 verbunden.

Anstrom- und abströmseitig zum Rücklauffilter 32 sind Druckmeßgeräte 35, 36 angeordnet, über deren Druckdifferenz der Verschmutzungsgrad des Rücklauffilters 32 bzw. dessen Filterelementes ablesbar ist.

Da Betriebsbedingungen auftreten können, bei denen die Pumpen 18 und 19 mehr Hydraulikflüssigkeit fördern und die Verbraucher 12 und 14 mehr Hydraulikflüssigkeit in die gemeinsame Rücklaufleitung 30 einspeisen, als von der Pumpe 20 für den Verbraucher 16 benötigt wird, ist auf der Abstromseite des Rücklauffilters 32 zusätzlich eine Verbindungsleitung 38 zum Vorratstank 24 vorgesehen, welche ein Druckhalteventil 40 beinhaltet, welches ein Einspeisen von rücklaufender und gefilterter Hydraulikflüssigkeit in den Vorratstank 24 erlaubt, jedoch ein Ansaugen an Hydraulikflüssigkeit aus dem Vorratstank 24 durch die Saugseite der Pumpe 20 verhindert.

Darüber hinaus ist erfindungsgemäß vorgesehen, daß die gemeinsame Rücklaufleitung 30 über ein Doppelrückschlagventil 42 direkt mit dem Vorratstank 24 verbunden ist. Das Doppelrückschlagventil beinhaltet antiparallel geschaltet ein Druckbegrenzungsventil 44 und ein Nachsaugventil 46, wobei das Druckbegrenzungsventil 44 in an sich bekannter Weise die Funktion eines Bypassventiles wahrnimmt, für den Fall, daß durch eine Verschmutzung und Erschöpfung des Filterelements des Rücklauffilters ein zu großer Druckanstieg auf der Anströmseite des Rücklauffilters 32 vorkommt. In einem solchen Falle öffnet das Druckbegrenzungsventil 44 und schafft eine Rücklaufmöglichkeit zum Vorratstank 24.

Das antiparallel geschaltete Nachsaugventil 46 ermöglicht hingegen eine direkte Versorgung der Verbraucher 12, 14 und 16 auf deren Rücklaufseite mit Hydraulikflüssigkeit im Falle, daß die jeweils zugehörende Pumpe 18, 19 bzw. 20 ausgefallen sein sollte und der Verbraucher in einer Notsituation dennoch nicht blockiert sein darf, wie z.B. bei einer hydrostatischen Lenkung. In einem solchen Falle saugt die von Hand betätigte Lenkung 12 bei bestimmten Lenkbewegungen Hydraulikflüssigkeit über die gemeinsame Rücklaufleitung 30 und die Leitung 26 an, was aber nur dann möglich ist, wenn über das antiparallel geschaltete Nachsaugventil 46 eine Verbindung zum Hydraulikflüssigkeitsvorrat im Tank 24 herstellbar ist. Beim Normalbetrieb ist auf der gemeinsamen Rücklaufleitung 30 ausreichend Druck, so daß das Nachsaugventil 46 geschlossen bleibt. Fällt die Lenkpumpe 18 aus und muß die Lenkung trotzdem bewegt werden, existiert die Möglichkeit der Ansaugung von Hydraulikflüssigkeit über das antiparallel geschaltete Nachsaugventil 46 und die gemeinsame Rücklaufleitung 30 sowie die Leitung 26.

Durch die Integration des Druckbegrenzungsventils 44 und eines Nachsaugventils in antiparalleler Schaltung in der von der gemeinsamen Rücklaufleitung 30 direkt zum Vorratstank 24 führenden Leitung ist eine sehr kompakte und mit einem minimalen Bauteileaufwand realisierbare Möglichkeit geschaffen, die hydrostatische Lenkung auch im Notfall, d.h. im Falle des Ausfalles der Lenkpumpe 18 in der notwendigen Weise mit Hydraulikflüssigkeit zu versorgen, so daß die Lenkung auch noch von Hand betätigbar ist. Die hierfür notwendigen Volumenströme liegen normalerweise im Bereich von cm³/sec.

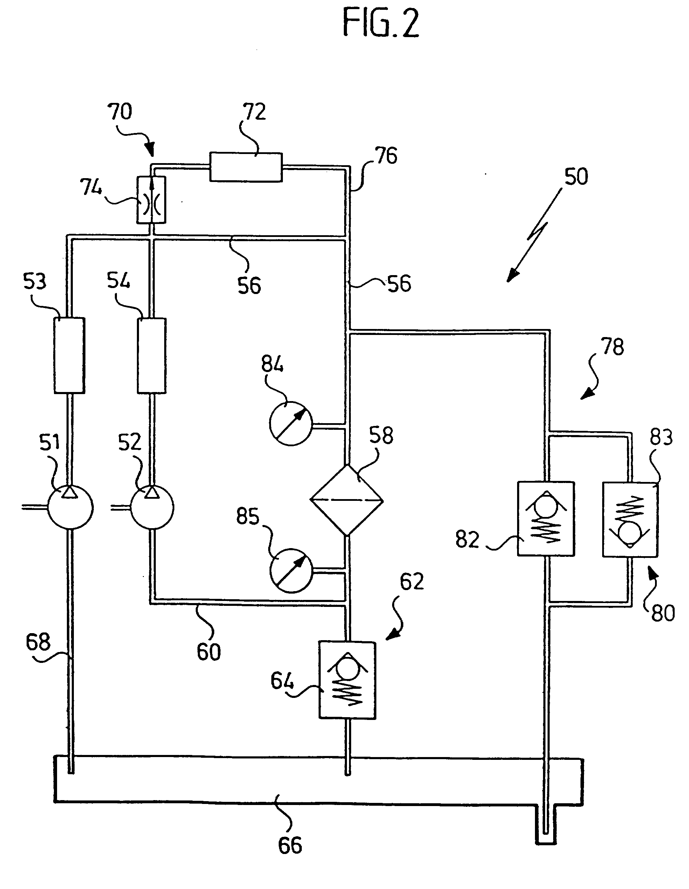

Fig. 2 zeigt eine alternative erfindungsgemäße hydraulische Schaltung 50, bei welcher über Pumpen 51, 52 Verbraucher 53, 54 mit Hydraulikflüssigkeit versorgen. Abströmseitig werden die rücklaufenden Hydraulikflüssigkeitsströme von den Verbrauchern 53, 54 in einer gemeinsamen Rücklaufleitung 56 zusammengefaßt, welche mit der Anströmseite eines Rücklauffilters 58 verbunden ist.

Die Abströmseite des Rücklauffilters 58 ist zum einen mit der Saugseite der Pumpe 52 über die Leitung 60 verbunden und zum andern über die Leitung 62, welche ein Druckhalteventil 64 beinhaltet mit einem Vorratstank 66 für die Hydraulikflüssigkeit. Saugt die Pumpe 52 über die Saugleitung 60 weniger Hydraulikflüssigkeit an als über die gemeinsame Rücklaufleitung 56 zum Rücklauffilter 58 zurückgeliefert wird, öffnet das Druckhalteventil 64 und läßt überschüssige Hydraulikflüssigkeit zum Vorratstank 66 durch. Diese Situation kommt dann vor, wenn die Pumpe 51 über ihre Saugleitung 68 mehr Hydraulikflüssigkeit zum Verbraucher 53 fördert, als die Pumpe 52 über die Leitung 60 aufnimmt.

Von der gemeinsamen Rücklaufleitung 56 verzweigt sich eine Versorgungsleitung 70 für einen weiteren Verbraucher in Form einer hydrostatischen Lenkung 72. Die Versorgungsleitung 70 beinhaltet ein Stromregelventil 74, welches den der hydrostatischen Lenkung 72 zur Verfügung gestellten Anteil an Hydraulikflüssigkeit begrenzt. Abstromseitig ist die hydrostatische Lenkung 72 über eine Leitung 76 wieder mit der gemeinsamen Rücklaufleitung 56 verbunden.

Abströmseitig von den Verbrauchern 53, 54 und auch 72 jedoch aufströmseitig von dem Rücklauffilter 58 verzweigt sich von der gemeinsamen Rücklaufleitung 56 eine Bypassleitung 78, welche zum Vorratstank 66 führt und welche ein Doppelrückschlagventil 80 beinhaltet. Das Doppelrückschlagventil 80 beinhaltet antiparallel zueinander geschaltet ein Druckbegrenzungsventil 82 und ein Nachsaugventil 83, von denen das Druckbegrenzungsventil 82 die Funktion eines Bypassventils übernimmt, welches öffnet, wenn anströmseitig zum Rücklauffilter 58 ein zu hoher Druckanstieg erfolgt und öffnet dann einen direkten Zugang zum Vorratstank 66.

Wird andererseits Hydraulikflüssigkeit von den Verbrauchern 53, 54 oder 72 benötigt, in einem Fall, in dem die Hydraulikpumpen 51 und 52 nicht arbeiten, kann über das Nachsaugventil 83, welches antiparallel zu dem Druckbegrenzungsventil 82 geschaltet ist, Hydraulikflüssigkeit direkt aus dem Vorratstank 66 über die Bypassleitung 78 und die gemeinsame Rücklaufleitung 56 zu den Verbrauchern gefördert werden.

Anströmseitig und abströmseitig zum Rücklauffilter 58 sind Druckmeßgeräte 84, 85 angeordnet, welche mit ihren Anzeigen eine Aussage über den Verschmutzungsgrad des Rücklauffilters bzw. des in dem Rücklauffilter 58 eingesetzten Filterelements treffen.

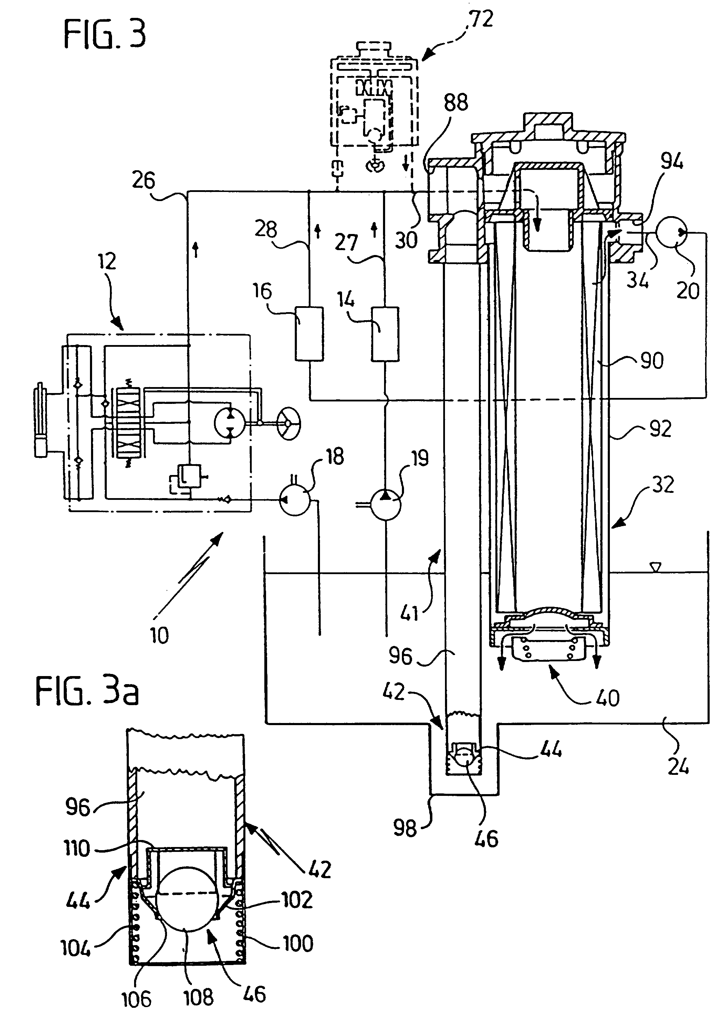

Die zuvor nur kurz angesprochenen Betriebszustände der Hydraulikschaltung der vorliegenden Erfindung werden im folgenden anhand der Fig. 3 bis 5 bzw. 3a bis 5a noch näher beschrieben.

Zunächst zeigt Fig. 3 eine Hydraulikschaltung entsprechend der von Fig. 1, so daß dieselben Bezugszeichen zur Bezeichnung der Einzelteile der Schaltung auch hier verwendet werden.

Im oberen Bereich der Schaltungsdarstellung ist in durchbrochener Darstellung eine hydrostatische Lenkung als Verbraucher eingezeichnet und diese alternative Anordnung der hydrostatischen Lenkung entspricht einer Anordnung, wie sie in Fig. 2 wiedergegeben ist. Die Lenkung ist deshalb hier ebenfalls mit dem Bezugszeichen 72 versehen.

In dem in Fig. 3 gezeigten Normalbetrieb der hydraulischen Schaltung fördern die Lenkpumpe 18 und die Pumpe 19 bei Bedarf Hydraulikflüssigkeit aus dem Vorrat des Tanks 24 zu der hydrostatischen Lenkung 12 bzw. zu dem Verbraucher 14. Verbrauchte Hydraulikflüssigkeit fließt über die Rücklaufleitungen 26 bzw. 27 und die gemeinsame Rücklaufleitung 30 zurück über das Rücklaufsaugfilter 32 über das Druckhalteventil 40 zum Vorratstank 24 (vergl. die in der Zeichnung angegebenen Pfeile) bzw. über die Saugleitung 34 in die Pumpe 20 zum Verbraucher 16. Normalerweise sind die beiden Pumpen 19 und 20 stets in Betrieb, wobei üblicherweise 80% des umlaufenden Volumens von der Pumpe 20 gefördert und 20% von der Pumpe 19. Die Pumpe 19 sorgt dabei dafür, daß die Saugseite der Pumpe 20 stets mit einer Vorspannung beaufschlagt ist.

Bei der in durchbrochener Darstellung gezeigten alternativen Schaltung der hydrostatischen Lenkung 72 erfolgt eine Versorgung der hydrostatischen Lenkung nicht durch eine eigene Pumpe sondern aus dem Rücklauf der Verbraucher. Der Rücklauf von der hydrostatischen Lenkung 72 fließt wieder in die gemeinsame Rücklaufleitung (hier Leitung mit dem Bezugszeichen 30). Für die prinzipiellen Betriebssituationen ändert sich hierdurch gegenüber der vorbeschriebenen Schaltungsanordnung nichts. Beim Passieren des Rücklaufsaugfilters 32 tritt die Hydraulikflüssigkeit über einen Einlaß 88 in das Saugfilter 32 ein und gelangt in das Innere eines Filterelements 90, welches in einem Gehäuse 92 des Saugfilters 32 untergebracht ist. Üblicherweise handelt es sich hierbei um ein Faltenfilter, wie es in Fig. 3 im Schnitt dargestellt ist. Nachdem die Hydraulikflüssigkeit das Filterelement 90 passiert hat, sammelt sie sich in dem Zwischenraum zwischen dem Filterelement 90 und der Wandung des Gehäuses 92 und es fließen über das Druckhalteventil 40 verbrauchsabhängig überschüssige Anteile der rücklaufenden Hydraulikflüssigkeit in den Vorratstank 24 zurück. Über den Auslaß 94 zur Saugseite der Pumpe 20 (über die Leitung 34) und von dort zu dem an der Druckseite der Pumpe angeschlossenen Verbraucher 16 wird der normale Verbrauchskreislauf geschlossen.

Fig. 3a zeigt nun im einzelnen die Normalbetriebstellung des Doppelrückschlagventils 42 mit seinem Druckbegrenzungsventil 44 und seinem Nachsaugventil 46. Das Doppelrückschlagventil 42 ist dabei am unteren Ende einer Steigleitung 96 angeordnet, welche in eine Vertiefung 98 im Boden des Tanks 24 hineinreicht. Die Vertiefung 98 im Boden des Tanks 24 sowie der Tank 24 selbst sind nur schematisch dargestellt.

Das Zweifach-Nachsaugventil 42 ist im einzelnen aufgebaut wie folgt:

In einem zylindrischen Gehäuse 100 ist ein erster Ventilkörper 102 von konischer Gestalt in Axialrichtung verschieblich gehalten. Der Ventilkörper 102 wird dabei von einer Schraubenfeder 104 an das untere Ende des Steigrohrs 96 anliegend gehalten (vergl. die in Fig. 3a dargestellte Stellung). Die Schraubenfeder 104 selbst stützt sich an einem Bund am unteren Ende des zylindrischen Gehäuses 100 ab.

Der Ventilkörper 102 weist an seinem nach unten weisenden, sich verjüngenden Ende eine Öffnung 106 auf, welche einen Ventilsitz für einen Ventilkörper 108 des Nachsaugventils 46 bildet.

Der Ventilkörper 108 selbst besitzt Kugelform und wird zwischen dem ersten Ventilkörper 102 und einem an diesem befestigten Käfig 110 ebenfalls axial verschieblich gehalten.

Im Normalbetrieb drückt der im Steigrohr 96 vorhandene Druck der Hydraulikflüssigkeit den Ventilkörper 108 nach unten, so daß er den Ventilsitz 106 belegt und dessen Öffnung verschließt. Der üblicherweise herrschende Druck beim Normalbetrieb ist kleiner als ein mindestens notwendiger Druck, um den Ventilkörper 102 des Bypassventiles gegen die Federkraft der Schraubenfeder 104 nach unten zu drücken und somit den Ventilkörper 102 vom unteren Ende des Steigrohrs 96 weg und in axialer Richtung nach unten zu drücken.

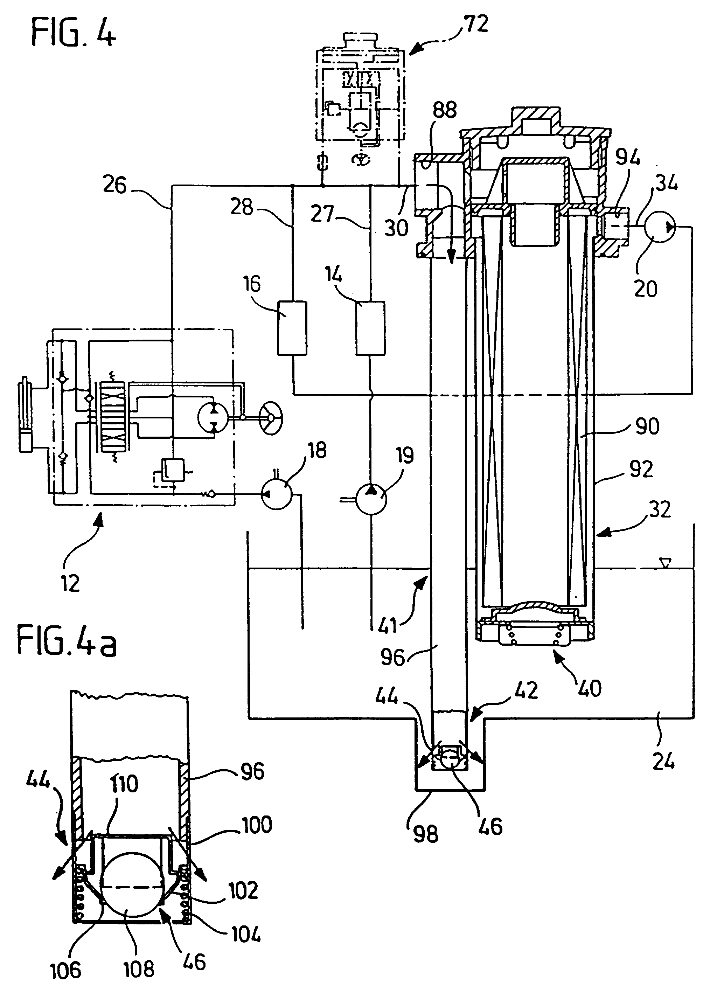

Dies geschieht, wenn das Druckbegrenzungsventil 44 anspricht, wie dies in den Fig. 4 und 4a gezeigt wird. Der Ventilkörper 108 des Druckhalteventils 46 verschließt immer noch die Öffnung 106 in dem Ventilkörper 102, der jedoch insgesamt mit dem Ventilkörper 108 und dem Käfig 110 in Axialrichtung des Steigrohrs 96 gesehen nach unten wandert und in der Wandung des Gehäuses 100 Durchtrittsschlitze freigibt (im einzelnen nicht dargestellt), und so eine Verbindung zwischen dem Inneren des Steigrohrs 96 und der Hydraulikflüssigkeit im Tank 24 herstellt. Dieses in Fig. 4a besonders deutlich gezeichnete Ansprechen des Druckbegrenzungsventils erfolgt immer dann, wenn die Filterkapazität des Filterelements 90 erschöpft ist, bzw. bei Kaltstart die Ölviskosität ansteigt, und sich auf der Druckseite des Rücklauffilters 32 ein zu hoher Druck aufbaut. Um eine Beschädigung des Filterelementes 90 zu vermeiden, wird dann bei einem bestimmten Druck das Bypassventil 44 geöffnet, so daß die rückfließende Hydraulikflüssigkeit über das Steigrohr 96 direkt in den Vorratstank 24 gelangen kann, unter Vermeidung des Filterelements 90.

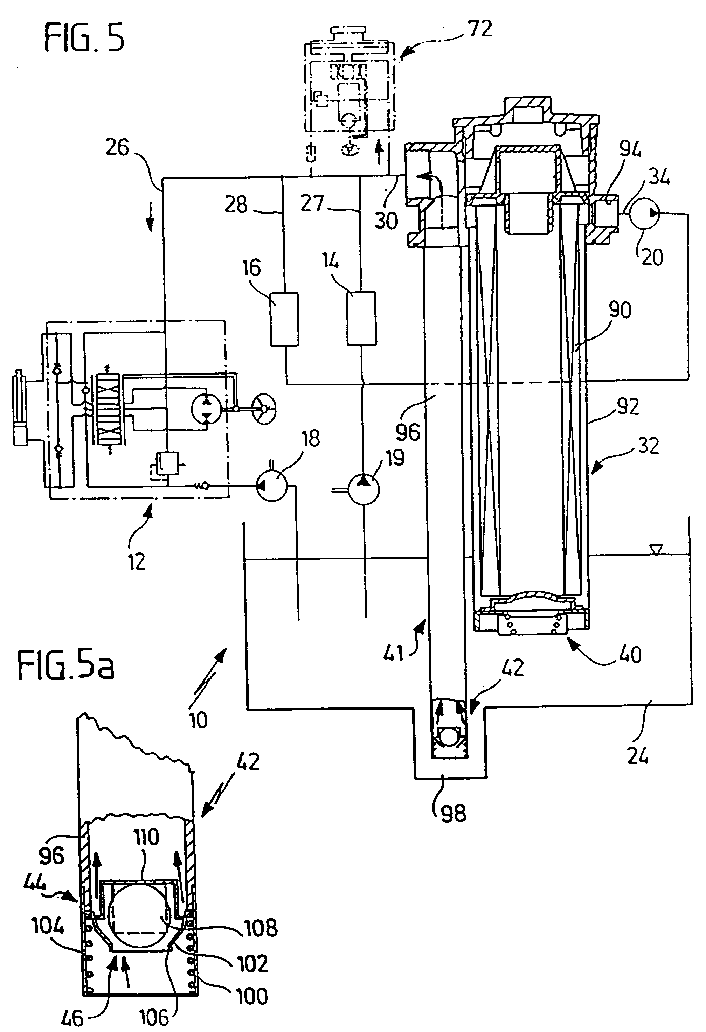

Fällt nun die Versorgung der einzelnen Verbraucher oder auch nur der hydrostatischen Lenkung mit Hydraulikflüssigkeit aus, kann, wie in Fig. 5 und insbesondere in Fig. 5a dargestellt, zur weiteren Betätigung der Lenkung von Hand im Bedarfsfall Hydraulikflüssigkeit über das Steigrohr 96 aus dem Tank 24, die Steigleitung 96, die gemeinsame Rückleitung 30 sowie die einzelne Rückleitung 26 zur hydrostatischen Lenkung 12 gefördert werden. Gleiches gilt für den Fall der durchbrochen dargestellten Anordnung der Lenkung 72 (vergl. die Pfeildarstellung). Bei dieser Stellung liegt der Ventilkörper 102 dichtend am unteren Ende des Steigrohrs 96 an, während der Ventilkörper 108 von dem Ventilsitz bzw. der Öffnung 106 abgehoben wird und im Käfig 110 bis an seine obere Begrenzung nach oben steigt. Dadurch öffnet sich ein ausreichender Durchlaß, um genügend Hydraulikflüssigkeit über das Steigrohr 96 etc. zur Abstromseite der hydrostatischen Lenkung zu liefern.

## Patentansprüche

1. Hydraulische Schaltung zur Versorgung eines ersten Hydraulikverbrauchers mit Hydraulikflüssigkeit, wobei die Schaltung einen Vorratstank mit Hydraulikflüssigkeit, eine erste Pumpe zum Bereitstellen der Hydraulikflüssigkeit für den ersten Hydraulikverbraucher und ein Rücklauffilter umfaßt, über welches die vom ersten Hydraulikverbraucher rückströmende Hydraulikflüssigkeit gefiltert wird, dadurch gekennzeichnet, daß das Rücklauffilter (32; 58) anströmseitig über eine Leitung (41; 78) mit dem Vorratstank (24; 66) für die Hydraulikflüssigkeit verbunden ist, welche in antiparalleler Schaltung ein Druckbegrenzungsventil (44; 82) und ein Nachsaugventil (46; 83) umfaßt und unterhalb des Hydraulikflüssigkeitsspiegels des Vorratstanks endet.

2. Hydraulische Schaltung nach Anspruch 1, dadurch gekennzeichnet, daß das Rücklauffilter (32; 58) mit einer ein Druckhalteventil (40; 64) enthaltenden Leitung (38; 62) mit dem Vorratstank für Hydraulikflüssigkeit verbunden ist.

3. Hydraulische Schaltung nach Anspruch 1 oder 2, dadurch gekennzeichnet, daß die erste Pumpe (20; 52) mit der Abstromseite des Rücklauffilters (32; 58) verbunden ist.

4. Hydraulische Schaltung nach Anspruch 1 oder 2, dadurch gekennzeichnet, daß die erste Pumpe (18; 51) mit ihrer Saugseite direkt mit dem Vorratstank (24; 66) verbunden ist.

5. Hydraulische Schaltung nach Anspruch 3 oder 4, dadurch gekennzeichnet, daß eine zweite Pumpe (19; 51) vorhanden ist, welche einen zweiten Hydraulikverbraucher (14; 53) direkt aus dem Vorratstank (24; 66) mit Hydraulikflüssigkeit versorgt.

6. Hydraulische Schaltung nach Anspruch 5, dadurch gekennzeichnet, daß der erste Hydraulikverbraucher eine Hilfskraftlenkanlage (72) ist und daß die Hilfskraftlenkanlage mit der Abstromseite des zweiten Verbrauchers (52) über ein Stromregelventil (74) zur Versorgung mit Hydraulikflüssigkeit verbunden ist.

7. Hydraulische Schaltung nach Anspruch 5 oder 6, dadurch gekennzeichnet, daß die Verbraucher (12, 14, 16; 53, 54, 72) in eine gemeinsame Rücklaufleitung münden, welche mit der Anstromseite des Rücklauffilters (32; 58) verbunden ist.

8. Doppelrückschlagventil zur Verwendung in der hydraulischen Schaltung gemäß einem der Ansprüche 1 bis 7 als Druckbegrenzungs- und Nachsaugventil in antiparalleler Schaltung, wobei das Doppelrückschlagventil (42; 80) ein Gehäuse (100) mit einem ersten Ventilsitz umfaßt, gegen den ein erster Ventilkörper (102) in vorgespanntem Zustand gehalten ist und damit das Druckbegrenzungsventil bildet, wobei der erste Ventilkörper (102) eine einen zweiten Ventilsitz bildende Öffnung (106) aufweist, welche mit einem zweiten Ventilkörper (108) verschließbar ist und das zum Druckbegrenzungsventil antiparallel arbeitende Nachsaugventil bildet.

9. Doppelrückschlagventil nach Anspruch 8, dadurch gekennzeichnet, daß der erste Ventilkörper eine Ventilplatte ist, welche federbelastet gegen den ersten Ventilsitz gedrückt wird.

10. Doppelrückschlagventil nach Anspruch 9, dadurch gekennzeichnet, daß der zweite Ventilkörper (108) eine sphärische Oberfläche aufweist, welche den zweiten Ventilsitz (106) verschließt.

11. Doppelrückschlagventil nach einem der Ansprüche 8 bis 10, dadurch gekennzeichnet, daß der zweite Ventilkörper (108) in einem an den ersten Ventilkörper (102) gehaltenen und von diesem verschlossenen Käfig (110) angeordnet ist.

12. Doppelrückschlagventil nach einem der Ansprüche 8 bis 11, dadurch gekennzeichnet, daß das Gehäuse (100) einen zylindrischen Abschnitt aufweist, in welchem der ersten Ventilkörper (102) axial verschieblich gehalten ist, und daß der zylindrische Abschnitt abströmseitig zum ersten Ventilsitz radiale Öffnungen für den Austritt von Hydraulikflüssigkeit in den Hydraulikflüssigkeitsvorrat aufweist.

## Claims

1. A hydraulic circuit for supplying a first hydraulic consumer with hydraulic fluid, wherein the circuit comprises a storage tank with hydraulic fluid, a first pump for making available the hydraulic fluid for the first hydraulic consumer and a return line filter, via which the hydraulic fluid flowing back from the first hydraulic consumer is filtered,
**characterised in that** the return line filter (32; 58) is connected on the inlet side via a line (41; 78) to the storage tank (24; 66) for the hydraulic fluid, which line comprises in an antiparallel circuit a pressure-limiting valve (44; 82) and a replenishing valve (46; 83) and ends beneath the hydraulic fluid level of the storage tank.

2. A hydraulic circuit according to Claim 1,
**characterised in that** the return line filter (32; 58) is connected by a line (38; 62) containing a pressure-maintaining valve (40; 64) to the storage tank for hydraulic fluid.

3. A hydraulic circuit according to Claim 1 or 2,
**characterised in that** the first pump (20; 52) is connected to the outlet side of the return line filter (32; 58).

4. A hydraulic circuit according to Claim 1 or 2,
**characterised in that** the first pump (18; 51) is connected by its intake side directly to the storage tank (24; 66).

5. A hydraulic circuit according to Claim 3 or 4,
**characterised in that** a second pump (19; 51) is provided, which supplies a second hydraulic consumer (14; 53) with hydraulic fluid directly from the storage tank (24; 66).

6. A hydraulic circuit according to Claim 5,
**characterised in that** the first hydraulic consumer is an auxiliary power steering installation (72)
**and in that** the auxiliary power steering installation is connected to the outlet side of the second consumer (52) via a flow control valve (74) for supply with hydraulic fluid.

7. A hydraulic circuit according to Claim 5 or 6,
**characterised in that** the consumers (12, 14, 16; 53, 54, 72) open into a common return line which is connected to the inlet side of the return line filter (32; 58).

8. A double check valve for use in the hydraulic circuit specified in one of Claims 1 to 7 as a pressure-limiting and replenishing valve in antiparallel circuit, wherein the double check valve (42; 80) comprises a housing (100) having a first valve seat, against which a first valve body (102) is retained in the prestressed state and consequently forms the pressure-limiting valve, wherein the first valve body (102) comprises an aperture (106) which forms a second valve seat and can be closed with a second valve body (108) and forms the replenishing valve working antiparallel to the pressure-limiting valve.

9. A double check valve according to Claim 8,
**characterised in that** the first valve body is a valve plate which is forced by spring loading against the first valve seat.

10. A double check valve according to Claim 9,
**characterised in that** the second valve body (108) comprises a spherical surface which closes the second valve seat (106).

11. A double check valve according to one of Claims 8 to 10,
**characterised in that** the second valve body (108) is retained in a cage (110) retained on the first valve body (102) and sealed thereby.

12. A double check valve according to one of Claims 8 to 11,
**characterised in that** the housing (100) comprises a first cylindrical portion in which the first valve body (102) is axially displaceably retained,
**and in that** the cylindrical portion on the outlet side to the valve seat comprises radial apertures for the outflow of hydraulic fluid into the hydraulic fluid storage tank.

## Revendications

1. Circuit hydraulique destiné à l'alimentation en liquide hydraulique d'un premier appareil utilisateur hydraulique, le circuit comprenant un réservoir avec du liquide hydraulique, une première pompe pour fournir du liquide hydraulique à l'appareil utilisateur hydraulique et un filtre de reflux via lequel le liquide hydraulique revenant du premier appareil utilisateur hydraulique est filtré, caractérisé en ce que le filtre de reflux (32 ; 58) est relié côté amont via une conduite (41 ; 78) avec le réservoir (24; 66) pour le liquide hydraulique, laquelle comprend en montage antiparallèle un limiteur de pression (44 ; 82) et une soupape de réaspiration (46 ; 83) et se termine en dessous du niveau de liquide hydraulique du réservoir.

2. Circuit hydraulique selon la revendication 1, caractérisé en ce que le filtre de reflux (32 ; 58) est relié avec le réservoir de liquide hydraulique par une conduite (38 ; 62) contenant une soupape de maintien de pression (40 ; 64).

3. Circuit hydraulique selon l'une ou l'autre des revendications 1 et 2, caractérisé en ce que la première pompe (20 ; 52) est reliée au côté aval du filtre de reflux (32 ; 58).

4. Circuit hydraulique selon l'une ou l'autre des revendications 1 et 2, caractérisé en ce que la première pompe (18 ; 51) est reliée avec son côté aspiration directement au réservoir (24; 66).

5. Circuit hydraulique selon l'une ou l'autre des revendications 3 et 4, caractérisé par une seconde pompe (19 ; 51) qui alimente en liquide hydraulique un second appareil utilisateur hydraulique (14 ; 53) directement depuis le réservoir (24; 66).

6. Circuit hydraulique selon la revendication 5, caractérisé en ce que le premier appareil utilisateur hydraulique est une direction assistée (72) et en ce que la direction assistée est reliée avec le côté aval du second appareil utilisateur hydraulique (52) via une soupape régulatrice de pression (74) pour l'alimentation en liquide hydraulique.

7. Circuit hydraulique selon l'une ou l'autre des revendications 5 et 6, caractérisé en ce que les appareils utilisateurs (12, 14, 16 ; 53, 54, 72) débouchent dans une conduite de reflux commune qui est reliée avec le côté amont du filtre de reflux (32 ; 58).

8. Soupape de non-retour double, destinée à être utilisée dans le circuit hydraulique selon l'une quelconque des revendications 1 à 7 en tant que limiteur de pression (44 ; 82) et que soupape de réaspiration (46 ; 83) en montage antiparallèle, la soupape de non-retour double (42 ;80) comprenant un boîtier (100) avec un premier siège de soupape, contre lequel un premier corps de soupape (102) est retenu à l'état précontraint et forme ainsi le limiteur de pression, le premier corps de soupape (102) présentant une ouverture (106) formant un second siège de soupape, ladite ouverture étant susceptible d'être fermée par un second corps de soupape (108) et formant la soupape de réaspiration travaillant de manière antiparallèle au limiteur de pression.

9. Soupape de non-retour double selon la revendication 8, caractérisée en ce que le premier corps de soupape est une plaque de soupape qui est pressée par la force d'un ressort contre le premier siège de soupape.

10. Soupape de non-retour double selon la revendication 8, caractérisée en ce que le second corps de soupape (108) présente une surface sphérique qui ferme le second siège de soupape (106).

11. Soupape de non-retour double selon l'une quelconque des revendications 8 à 10, caractérisée en ce que le second corps de soupape (108) est agencé dans une cage (110) maintenue sur le premier corps de soupape (102) et fermée par celui-ci.

12. Soupape de non-retour double selon l'une quelconque des revendications 8 à 11, caractérisée en ce que le boîtier (100) présente un tronçon cylindrique dans lequel le premier corps de soupape (102) est retenu de manière à pouvoir être déplacé axialement, et en ce que le tronçon cylindrique présente, du côté aval par rapport au premier siège de soupape, des ouvertures radiales pour la sortie du liquide hydraulique jusque dans le réservoir de liquide hydraulique.
